# EUROPÄISCHE PATENTANMELDUNG

(11) **EP 2 086 101 A2**
(43) Veröffentlichungstag der Anmeldung: **05.08.2009**
(21) Anmeldenummer: 09000852.5
(22) Anmeldetag: 22.01.2009
(51) Int. Cl.: H02M 7/00

(54) **Stromeinspeisungsvorrichtung**

(30) Priorität: 31.01.2008 DE 102008007145
(71) Anmelder: Wieland Electric GmbH, 96045 Bamberg (DE)
(72) Erfinder: Freudensprung, Christian, 96110 Straßgiech (DE); Wegmann, Wolfgang, 93138 Lappersdorf (DE); Schober, Leonhard, 90613 Großhabersdorf (DE); Fenn, Andreas, 91301 Forchheim (DE)
(74) Vertreter: Tergau, Dietrich

(57) **Zusammenfassung**

Vorrichtung zur Stromeinspeisung in einen Wechselrichter
• mit mindestens einem Strangmodul (2), an welches mindestens ein aus mehreren in Reihe geschalteten Stromquellen bestehender Stromstrang (15) angeschlossen ist und
• mit mindestens einem Basismodul (1), an welches ein oder mehrere Strangmodule (2) angeschlossen sind;
• das Strangmodul (2) weist mindestens
•• einen Stromeingang (10) und einen Stromausgang (11) für den aus dem Stromstrang (15) eingeleiteten Strom,
•• eine Messeinrichtung (16) und eine Auswerteeinrichtung (17) für diesen Strom sowie
•• einen Datenausgang (9) für die von der Auswerteeinrichtung (17) ermittelten Daten auf,

• das Basismodul (1) weist mindestens
•• einen Summenstromeingang (7) und einen Summenstromausgang (5) für den aus den Strangmodulen (2) weitergeleiteten Summenstrom (19),
•• einen Dateneingang (8) für die von den Auswerteeinrichtungen (17) der Strangmodule (2) ermittelten Daten sowie
•• eine zentrale Auswerteeinrichtung (21) zur Aufbereitung und Weitergabe dieser Daten an eine übergeordnete Steuer- und Regeleinrichtung auf,

• die Stromausgänge (11) der Strangmodule (2) sind über eine Stromsammelbrücke (13) miteinander verbunden,
• die Stromsammelbrücke (13) ist ihrerseits am Summenstromeingang (7) des Basismoduls (1) angeschlossen,
• die Datenausgänge (9) der Strangmodule (2) sind über eine Datensammelbrücke (14) miteinander verbunden und
• die Datensammelbrücke (14) ist wiederum am Dateneingang (8) des Basismoduls (1) angeschlossen.

## Beschreibung

Die vorliegende Erfindung betrifft eine Vorrichtung zur Stromeinspeisung in einen Wechselrichter. Im weiteren Sinne betrifft die Erfindung eine Anlage zur Stromerzeugung mit einer Vielzahl von dezentralen Stromerzeugungsquellen. Derartige Stromerzeugungsanlagen sind zur Stromerzeugung mittels regenerativer Energiequellen bekannt. Insbesondere eignet sich die Erfindung zur Verwendung in Windkraftanlagen und Photovoltaikanlagen. Die Vorrichtung ist aber auch für andere denkbare Stromerzeugungsanlagen verwendbar. Nähere Einzelheiten der Erfindung sind nachfolgend am Beispiel einer Photovoltaikanlage erläutert, ohne jedoch das Einsatzgebiet der Erfindung auf solche Photovoltaikanlagen einzuschränken.

Ein unter Verwendung einer Photovoltaikanlage betriebenes Solarkraftwerk besteht aus einer Vielzahl von Photovoltaikmodulen. Die einzelnen Photovoltaikmodule sind zu sogenannten Modulgruppen zusammengefasst. Jede Modulgruppe besteht aus einer Vielzahl von in Reihe geschalteten einzelnen Photovoltaikmodulen. Die in Reihe geschalteten Photovoltaikmodule bilden einen Strang, der nachfolgend Stromstrang bezeichnet ist. Der Stromstrang ist also nichts anderes als eine Anzahl von in Reihe geschalteten Stromquellen, hier Photovoltaikmodulen. Die wiederum eine Modulgruppe bildenden Stromstränge laufen in einem Generatoranschlusskasten zusammen, der gleichsam das Bindeglied für die Stromstränge bildet. Aus dem Generatoranschlusskasten wird der von den einzelnen Stromsträngen gebildete Summenstrom an einen Wechselrichter abgeleitet. Dort wird der als Gleichstrom erzeugte Solarstrom in Wechselstrom, also Netzstrom umgewandelt.

Aufgrund der Bindegliedfunktion des Generatoranschlusskastens wird dort der von jeder Modulgruppe gelieferte Stromanteil ermittelt. Insbesondere geht es bei dieser Stromanteilsermittlung darum, den Wirkungsgrad der einzelnen Modulgruppe zu erfassen, um die Wirkungsgrade technisch unterschiedlich ausgestalteter Modulgruppen miteinander zu vergleichen. Sehr viel wichtiger im Normalbetrieb ist jedoch die Möglichkeit der Fehlerermittlung. Die Strommessung im Bereich des Generatoranschlusskastens ermöglicht es nämlich herauszufinden, ob eines der Photovoltaikmodule oder mehrere Photovoltaikmodule innerhalb einer Modulgruppe defekt sind.

Nach dem Stand der Technik (z.B. US 2006/0162772 A1) ist es bekannt, jeder Modulgruppe eine Messplatine zuzuordnen. Diese Messplatine weist eine vordefinierte Anzahl von Eingängen auf. An jeden dieser Eingänge ist eine der Modulgruppen oder ein Stromstrang angeschlossen. Aufgrund der festen Anzahl von Eingängen an der Messplatine ist die Anzahl der anschließbaren Modulgruppen oder Stromstränge vorgegeben. Soll die Konfiguration der Photovoltaikanlage geändert oder erweitert werden, ist dies zwangsläufig mit einem Austausch der Messplatine verbunden.

Weiterhin ist es bekannt, mit handelsüblichen Klemmen den Strom aus den Stromsträngen bzw. den Modulgruppen abzugreifen und den Klemmen eine aufwendige Sensorik vorzuschalten und diese mit einer Auswerteeinrichtung zu koppeln. Diese Lösung ist sehr aufwendig und sehr kompliziert zu installieren. Außerdem ist der Platzbedarf dieser bekannten Lösungen sehr hoch.

Hiervon ausgehend liegt der Erfindung die Aufgabe zugrunde, die Stromeinspeisungsvorrichtung mit dezentralen Stromquellen konstruktiv zu vereinfachen und hinsichtlich ihrer Überwachungsfunktionen zu verbessern.

Die erfindungsmäßige Lösung beruht auf der Grundüberlegung, die Stromeinspeisungsvorrichtung nach Art eines Baukastens aufzubauen. Hierfür ist zunächst ein Basismodul vorgesehen. Das Basismodul weist einen Summenstromausgang auf, um den in der jeweiligen Modulgruppe erzeugten Summenstrom an den Wechselrichter weiterzuleiten. An das Basismodul reihen sich zumindest ein, üblicherweise jedoch mehrere Strangmodule an. An jedes dieser Strangmodule ist ein aus mehreren in Reihe geschalteten Stromquellen bestehender Stromstrang angeschlossen. In dem hier behandelten Beispielfall besteht der Stromstrang aus mehreren in Reihe geschalteten Photovoltaikmodulen. Der Stromstrang gibt den erzeugten Strom zunächst an das ihm zugeordnete Strangmodul ab. Die nebeneinander aufgereihten Strangmodule weisen jeweils einen Stromausgang auf. Die Stromausgänge der einzelnen Strangmodule sind ihrerseits über eine Stromsammelbrücke miteinander verbunden. Die Stromsammelbrücke ist ihrerseits am Summenstromeingang des Basismoduls angeschlossen. Infolge der Verbindung der Stromausgänge der einzelnen Strangmodule mittels der Stromsammelbrücke gelangt der Summenstrom über den Summenstromeingang in das Basismodul und über den Summenstromausgang des Basismoduls an den Wechselrichter.

Um das Verhalten der Stromquellen eines Stromstrangs überwachen zu können, weist darüber hinaus jedes der Strangmodule eine Messeinrichtung und eine Auswerteeinrichtung auf. Mit Hilfe der Messeinrichtung wird der durch den Stromeingang vom Stromstrang in das Strangmodul eingeleitete Strom gemessen. Das Messergebnis wird in der Auswerteeinrichtung ausgewertet und in entsprechende Daten transformiert. Die Daten werden über jeweils an den Strangmodulen vorgesehene Datenausgänge an einen im Basismodul vorgesehenen Dateneingang weitergeben. Zur Datenübertragung von den Strangmodulen an das Basismodul sind die Datenausgänge der Strangmodule mittels einer Datensammelbrücke ihrerseits miteinander verbunden. Das Basismodul weist wiederum eine eigene zentrale Auswerteeinheit zur Aufbereitung der von den einzelnen Strangmodulen empfangenen Daten auf. Die Auswerteeinheit ist darüber hinaus so ausgelegt, dass sie die zentral ausgewerteten Daten an eine übergeordnete Steuer- und Regeleinrichtung weitergeben kann. Diese Steuer- und Regeleinrichtung kann als übergeordnete Anlagenüberwachung ausgestaltet sein. Auch ist es denkbar, die im Basismodul aufbereiteten Daten aus der zentralen Auswerteeinheit an eine Leitwarte zur weiteren Auswertung weiterzugeben. Schließlich ist es auch möglich, ein vollelektronisches, computergestütztes Anlagenmanagementsystem als Steuer- und Regeleinrichtung einzusetzen.

Vorteilhaft an der Erfindung ist die Möglichkeit, sowohl den Energiefluss als auch den Datenfluss über dieselben Bausteine des Baukastensystems abzuwickeln. Weiterhin vorteilhaft ist es, das in einer Grundform des Baukastensystems nur zwei verschiedene Bausteinarten vorhanden sein müssen, nämlich das Basismodul und das Strangmodul. Vorteilhaft kann aus einer Vielzahl identischer Strangmodule in Verbindung mit einem Basismodul das gesamte Baukastensystem aufgebaut werden.

Da das Strangmodul sowohl die Energieweiterleitung bewerkstelligt als auch eine dezentrale Mess- und Auswerteeinrichtung sowie einen Datenausgang aufweist, kann als Mess- und Auswerteeinrichtung ein Elektronikbaustein verwendet werden, der vom jeweiligen Anlagenersteller völlig individuell und auf den jeweiligen Einsatzfall zugeschnitten konfiguriert werden kann. Des Weiteren ist es infolge der Verbindung zwischen den Mess- und Auswerteeinrichtungen in den Strangmodulen einerseits und der zentralen Auswerteeinheit im Basismodul andererseits möglich, die gemessenen Werte für eine übergeordnete Anlagenüberwachung zu nutzen.

Aufgrund des baukastenartigen Aufbaus ist die Anlage problemlos veränderbar oder erweiterbar. Aufgrund einer einfachen Ausgestaltung der Bausteine ist es zudem möglich, die Anlage schnell und einfach aufzubauen. Aufwendige Verdrahtungsarbeiten können eingespart werden.

Nach Anspruch 1 besteht die Vorrichtung aus wenigstens einem Strangmodul mit einem daran angeschlossenen Stromstrang. Der Stromstrang besteht seinerseits wiederum aus mehreren in Reihe geschalteten Stromquellen. Die Strangmodule sind an ein Basismodul angeschlossen. Das Strangmodul weist zumindest einen Stromeingang und einen Stromausgang für den aus dem Stromstrang eingeleiteten Strom auf. Darüber hinaus weist das Strangmodul eine Messeinrichtung und eine Auswerteeinrichtung für den Strom sowie einen Datenausgang für die von der Auswerteeinrichtung ermittelten Daten auf. Das Basismodul weist einen Summenstromeingang auf. Der Summenstromeingang ist mit einer Stromsammelbrücke verbunden, welche ihrerseits die Stromausgänge der einzelnen Strangmodule miteinander verbindet. Der am Basismodul ebenfalls vorhandene Summenstromausgang dient zur Weiterleitung des Summenstroms zum zentralen Wechselrichter. Für die Datenübertragung ist schließlich ein Dateneingang am Basismodul ausgebildet. Die Datenausgänge der Strangmodule sind ihrerseits über eine Datensammelbrücke miteinander verbunden. Die Datensammelbrücke ist wiederum am Dateneingang des Basismoduls angeschlossen und liefert so die Input-Daten für die zentral im Basismodul angeordnete Auswerteeinheit. Diese Auswerteeinheit bereitet die von den einzelnen Strangmodulen gelieferten Daten auf und gibt sie an eine übergeordnete Steuer- und Regeleinrichtung weiter.

In den rückbezogenen Ansprüchen sind teilweise zweckmäßige und teilweise für sich selbst erfinderische Weiterbildungen der Erfindung beansprucht.

Gemäß Anspruch 2 dienen - wie bereits ausgeführt - Photovoltaikmodule als Stromquellen. Als besonders vorteilhaft wird es angesehen, jedem Strangmodul jeweils zwei separate Stromstränge zuzuordnen.

Zur Realisierung eines Baukastensystems wird es als besonders vorteilhaft angesehen, sowohl das Basismodul als auch das Strangmodul nach Art von Reihenklemmen auszubilden. Reihenklemmen sind in Schaltschränken besonders platzsparend montierbar. Auf diese Weise kann auf das gesamte Montage- und Anwendungs-Know-How auf dem Gebiet der Reihenklemmen zurückgegriffen werden, um den Betrieb einer Energieerzeugungsanlage, insbesondere eines Solarkraftwerks zu verbessern.

In weiterer Ausgestaltung der Erfindung ist es vorgesehen, die Reihenklemmen als Trennklemmen auszugestalten. Auf diese Weise ist es möglich, einzelne Stromstränge auch während des Betriebs der Vorrichtung von der Vorrichtung zu trennen. Dies kann zu Austausch- und Reparaturzwecken dienlich sein, weil das Abschalten der gesamten Vorrichtung auf diese Weise entfällt.

In weiterer Ausgestaltung ist es vorgesehen, die Stromausgänge an den Strangmodulen sowie den Summenstromeingang am Basismodul als Klemmkontakte auszubilden, um auf diese Weise einen aus dem Sektor der Reihenklemmen bekannten Verbindungskamm als Stromsammelbrücke verwenden zu können. Dieselbe Ausgestaltung der Datenausgänge an den Strangmodulen und des Dateneingangs am Basismodul erlaubt ebenfalls die Verwendung eines bekannten Verbindungskamms als Datensammelbrücke.

Alternativ hierzu ist es ebenso vorteilhaft, die Strom- bzw. Datenausgänge der Strangmodule bzw. den Summenstromeingang oder den Dateneingang am Basismodul maulartig oder so auszugestalten, dass sie zur Aufnahme einer Sammelschiene geeignet sind. Auf diese Weise ist es möglich, eine handelsübliche Sammelschiene wie sie aus der Reihenklemmentechnik sattsam bekannt ist, als Stromsammelbrücke bzw. Datensammelbrücke zu verwenden.

In weiterer Ausgestaltung ist es vorgesehen, die Stromsammelbrücke bzw. die Datensammelbrücke nicht als zentrales Teil auszubilden, sondern an den einzelnen Strangmodulen dezentrale Einrichtungen vorzusehen, die bei zusammengesetzter Modulanordnung wiederum als Stromsammelbrücke bzw. Datensammelbrücke zusammenwirken.

Hierfür sind insbesondere bekannte Verbindungsschieber vorgesehen, die zwei leitende, miteinander verbundene Kontaktarme aufweisen. Im Strangmodul ist eine mit dem Stromeingang gekoppelte Stromschiene vorgesehen. Von dieser Stromschiene greift der eine der beiden Kontaktarme Potential ab und überträgt es auf den zweiten Kontaktarm. Der zweite Kontaktarm dient zugleich als Stromausgang und greift in einen Brückungseingang am benachbarten Strangmodul ein. Dieser Brückungseingang ist wiederum leitungsmäßig mit dem Stromausgang, also dem zweiten Kontaktarm im benachbarten Strangmodul verbunden. Auf diese Weise wird das elektrische Potential von Strangmodul zu Strangmodul weitergeleitet, um schließlich von dem dem Basismodul benachbarten Strangmodul über den zweiten Kontaktarm in einen entsprechend ausgestalteten Summenstromeingang des Basismoduls eingeleitet zu werden.

In einer weiteren vorteilhaften Ausgestaltung sind entweder der Stromausgang oder der Datenausgang oder beide Ausgänge am Strangmodul als Kupplungsteile eines Steckverbinders ausgestaltet. Sie wirken dann mit entsprechenden komplementär ausgestalteten Brückungseingängen am jeweils benachbarten Strangmodul zusammen. Auf diese Weise ist es möglich, über die einzelnen Steckverbindungen sowohl den Potential- als auch den Datentransfer von Strangmodul zu Strangmodul zu realisieren, um schließlich über eine ebenso ausgebildete Steckkupplung sowohl den Summenstrom als auch den Datenstrom an das Basismodul abzugeben.

In weiterer Ausgestaltung ist es vorgesehen, sämtliche Basis- und Strangmodule auf einer Hutschiene zu montieren. Auf diese Weise bilden Basismodule und Strangmodule eine Modulreihe.

In weiterer Ausgestaltung können weitere Funktionsmodule vorgesehen sein, welche weitere Funktionen zum sicheren Anlagenbetrieb zur Verfügung stellen.

In weiterer Ausgestaltung ist die erfindungsmäßige Vorrichtung als Überwachungssystem für eine Photovoltaikanlage bzw. ein Solarkraftwerk vorgesehen.

Die schnelle und einfache Behebung von Störungen im Verlauf des Anlagenbetriebs sind gewährleistet. Es muss lediglich der defekte Teil der Anlage ersetzt werden. Die übrigen funktionsfähigen Stromstränge bleiben erhalten und deren Verdrahtung unberührt. Ersatzteilhaltung und Logistik werden vorteilhaft optimiert. Mit Hilfe des Einsatzes intelligenter Elektronik, die eine selbständige datentechnische Zuordnung gewährleistet, so dass das Fachpersonal beim Aufbau der Anlage vor Ort lediglich über Fachkenntnisse auf dem Gebiet der Elektrik, nicht jedoch auf dem Gebiet der Datentechnik verfügen muss.

Schließlich substituiert die Vorrichtung einen Teil der sonst erforderlichen Verdrahtung im Generatoranschlusskasten.

Schließlich ist es auch möglich, sowohl für den Pluspol als auch für den Minuspol mit Hilfe der Module jeweils einen Verdrahtungsblock aufzubauen. In den Verdrahtungsblock für den Minuspol können anlagentechnisch geforderte Rückstromdioden oder Sicherungen mit aufgenommen werden. Auch ist es möglich, lediglich die elektrischen Potentiale miteinander zu verbinden. Die integrierte Trennfunktion erlaubt es, einzelne Stromstränge vom Potential zu trennen ohne die Verdrahtung hierfür lösen zu müssen. Messaufgaben zur Fehlerlokalisierung werden dadurch erheblich erleichtert. Ein weiterer Vorteil ist die Möglichkeit der flexiblen Anlagenüberwachung.

Anhand der nachfolgenden Zeichnung ist die Erfindung mit weiteren Einzelheiten dargestellt. Die einzelnen Figuren zeigen:
- Fig. 1: die Konzeptdarstellung einer aus einem Basismodul und mehreren Strangmodulen baukastenartig zusammengesetzten Modulreihe,
- Fig. 2: eine Ausführung des erfindungsmäßigen Strangmoduls,
- Fig. 3: eine Ausführung des erfindungsmäßigen Basismoduls,
- Fig. 4: ein Funktionsmodul mit weiteren Funktionen,
- Fig. 5: den Gesamtaufbau eines mittels der Erfindung realisierten Überwachungs-systems und
- Fig. 6: ein Ausführungsbeispiel einer Modulreihe nach der Erfindung mit Reihenklemmen.

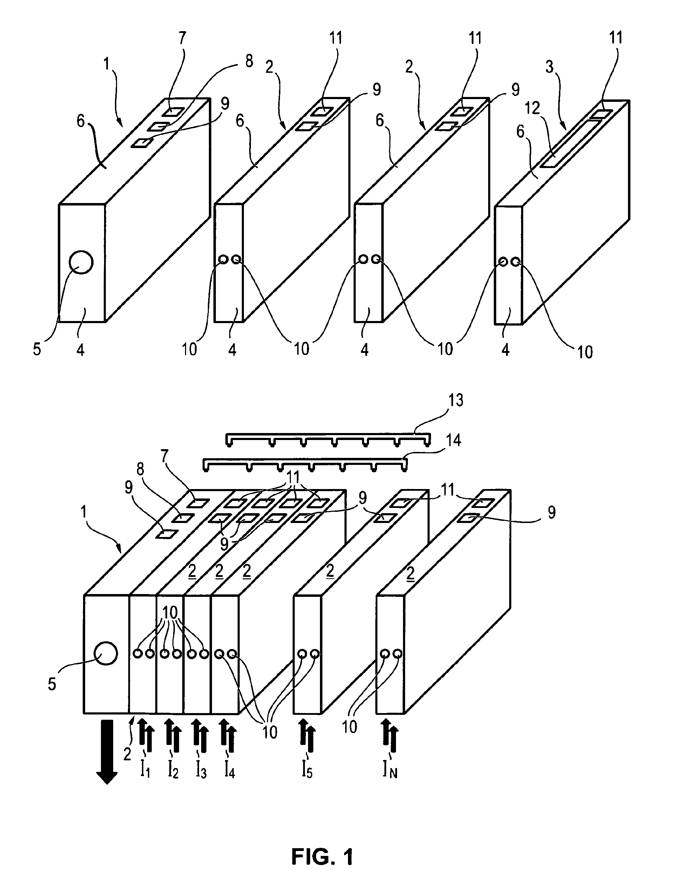

Fig. 1 zeigt im oberen Teil getrennt dargestellte Module, nämlich links das Basismodul 1, rechts neben dem Basismodul 1 zwei Strangmodule 2 sowie ein weiteres, im oberen Teil der Fig. 1 rechts angeordnetes Funktionsmodul 3. Sämtliche Module 1, 2, 3 sind quaderförmig. Das Basismodul 1 weist auf seiner dem Betrachter zugewandten kurzen Schmalseite 4 den Summenstromausgang 5 auf. Auf der der kurzen Schmalseite 4 benachbarten langen Schmalseite 6, die im oberen Teil der Fig. 1 nach oben weist, sind der Summenstromeingang 7, der Dateneingang 8 sowie der Datenausgang 9 angeordnet.

Auf der dem Betrachter zugewandten kurzen Schmalseite 4 der Strangmodule 2 sind die beiden nebeneinander angeordneten Stromeingänge 10 erkennbar. Jeder dieser Stromeingänge 10 ist zum Anschluss eines Stromstrangs 15 vorgesehen.

Auf der der kurzen Schmalseite 4 benachbarten langen Schmalseite 6 der Strangmodule 2 ist jeweils ein Stromausgang 11 und daneben ein Datenausgang 9 vorgesehen.

Das in Fig. 1 in der oberen Darstellung rechts dargestellte Funktionsmodul 3 ist als Sonderform eines Strangmoduls 2 ausgebildet. Es weist wiederum an seiner kurzen Schmalseite 4 die beiden Stromeingänge 10 auf sowie auf seiner daran angrenzenden langen Schmalseite 6 einen Stromausgang 11. Darüber hinaus ist ein Display 12 zum bedienen und beobachten der Funktionserweiterungen vorgesehen.

Im unteren Teil der Fig. 1 sind mit den kleinen nach oben weisenden Pfeilen, die mit I₁, I₂, I₃, I₄, I₅ und I_{N} gekennzeichnet sind, die Potentiale der Stromstränge 15 dargestellt, die an die jeweiligen Stromeingänge 10 angeschlossen werden. Der dicke, nach unten gerichtete Pfeil im unteren Teil der Fig. 1 symbolisiert den aus dem Summenstromausgang 5 an den Wechselrichter weitergeleiteten Summenstrom 19. Im unteren Teil der Fig. 1 sind schließlich angedeutet der als Stromsammelbrücke 13 wirksame Verbindungskamm sowie der als Datensammelbrücke 14 verwendete Verbindungskamm. Beide Verbindungskämme weisen nach unten gerichtete Fortsätze auf. Diese Fortsätze werden im Falle der Stromsammelbrücke 13 in den Stromausgängen 11 der Strangmodule 2 sowie im Summenstromeingang 7 am Basismodul 1 klemmfixiert. Analog dazu werden die Fortsätze an der Datensammelbrücke 14 in die Datenausgänge 9 der Strangmodule 2 sowie in den Dateneingang 8 des Basismoduls 1 eingeschoben und dort klemmfixiert. Auf diese Weise sind sämtliche Stromausgänge 11 und sämtliche Datenausgänge 9 der Strangmodule 2 miteinander verbunden. Außerdem sind die Stromausgänge 11 der Strangmodule 2 mit dem Summenstromeingang 7 des Basismoduls 1 ebenso verbunden wie die Datenausgänge 9 der Strangmodule 2 mit dem Dateneingang 8 des Basismoduls 1. Aus der Darstellung der Fig. 1 ist schließlich erkennbar, dass das Basismodul 1 deutlich breiter bauend ausgestaltet ist als die Strangmodule 2. Dies hat seinen Grund darin, dass das Basismodul 1 sehr viel höhere Ströme leiten muss, weshalb der Leiterquerschnitt des an den Summenstromausgang 5 anzuschließenden Leiters deutlich größer als der Leiterquerschnitt der einzelnen Stromstränge 15 ist, welche an die Stromeingänge 10 der Strangmodule 2 angeschlossen werden. Zum anderen muss auch das Innenleben des Basismoduls 1 für die Übertragung deutlich höherer Ströme geeignet sein als das Innenleben der Strangmodule 2.

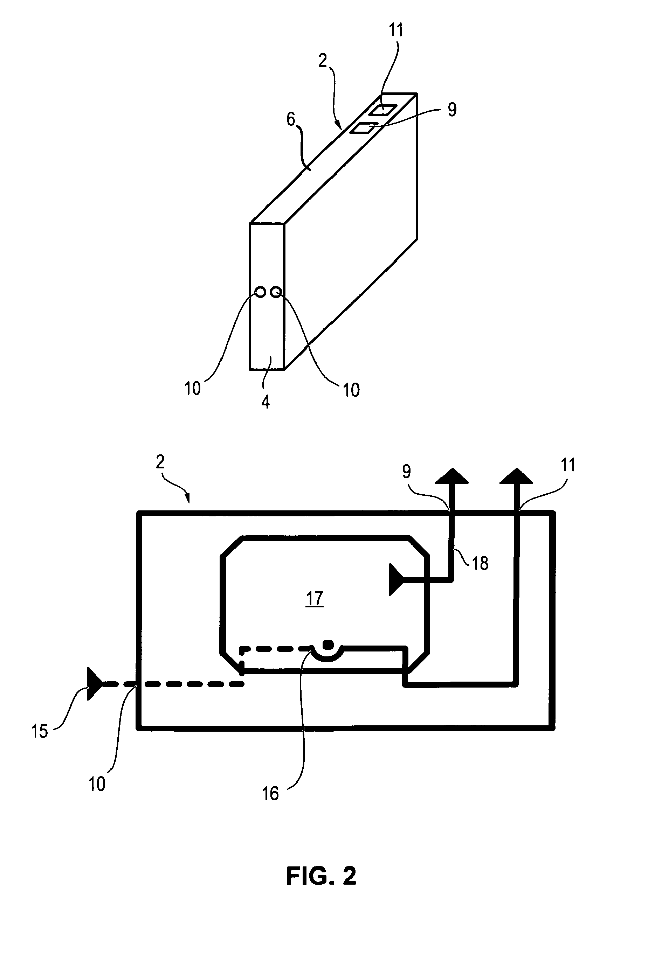

Der obere Teil der Fig. 2 zeigt noch einmal das bereits anhand der Fig. 1 beschriebene Strangmodul 2. In der unteren Hälfte der Fig. 2 ist ein Schaltbild abgebildet. Im Schaltbild erkennbar ist der als Stromquelle dargestellte Stromstrang 15, der am Stromeingang 10 angeschlossen ist. Der in das Basismodul 2 eingeleitete Strom wird an der Messeinrichtung 16 gemessen und von der als Elektronikbaustein ausgestalteten Auswerteeinrichtung 17 ausgewertet. Die Auswerteeinrichtung 17 gibt schließlich ein Datensignal 18 an den Datenausgang 9 weiter, während der vom Stromstrang 15 durch den Stromeingang 10 in das Strangmodul 2 eingeleitete Strom zum Stromausgang 11 weitergeleitet wird.

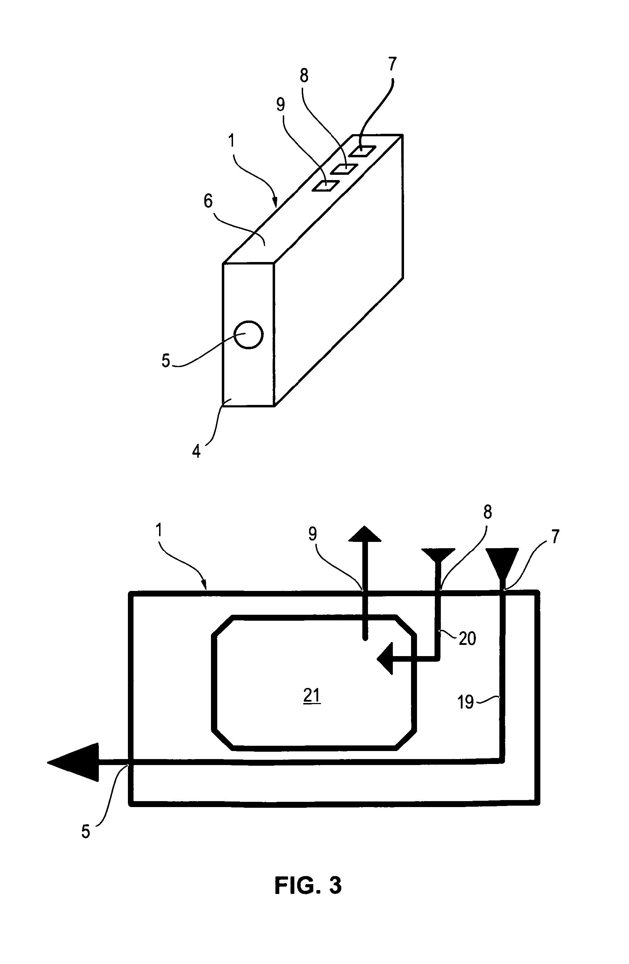

Der obere Teil der Fig. 3 zeigt das bereits anhand der Fig. 1 erläuterte Basismodul 1. Im unteren Schaubild der Fig. 3 ist erkennbar der mit Hilfe der Stromsammelbrücke 13 in den Summenstromeingang 7 einzuleitende Summenstrom 19, der durch den Summenstromausgang 5 an den in der Zeichnung nicht dargestellten Wechselrichter weitergegeben wird. Erkennbar ist der Datenstrom 20, der die durch den Dateneingang 8 in das Basismodul 1 eingespeiste Datenmenge repräsentiert, welche mit Hilfe der Datensammelbrücke 14 von den einzelnen Strangmodulen 2 in das Basismodul 1 übertragen wird. Des Weiteren erkennbar ist die zentrale Auswerteeinheit 21, welche die mit dem Datenstrom 20 gelieferten Daten aufbereitet und auswertet und durch den Datenausgang 9 an ein übergeordnetes Managementsystem für die Vorrichtung weitergibt, welches in der Zeichnung nicht dargestellt ist.

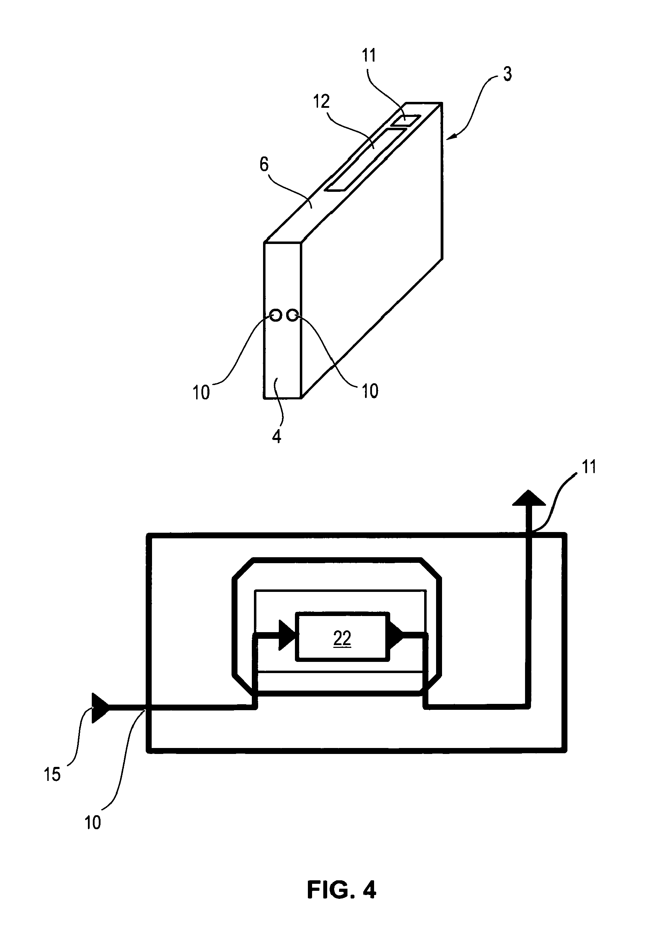

Fig. 4 zeigt wiederum das Funktionsmodul 3 mit seinen mit dem Strangmodul 2 baugleichen Stromeingängen 10 und dem Stromausgang 11. Im unteren Schaubild der Fig. 4 ist wiederum der Stromstrang 15 schematisch angedeutet, welcher an einen der Stromeingänge 10 angeschlossen ist. Der durch den Stromeingang 10 eingeleitete Strom wird in den Funktionsbaustein 22 eingeleitet. Der Funktionsbaustein 22 enthält Funktionen zur Sicherstellung der Funktionstüchtigkeit der Photovoltaikanlage. Nach dem Durchlaufen des Funktionsbausteins 22 wird der durch den Stromeingang 10 eingeleitete Strom durch den Stromausgang 11 an die zugeordnete Stromsammelbrücke 13, die in der Zeichnung nicht dargestellt ist, weitergeleitet.

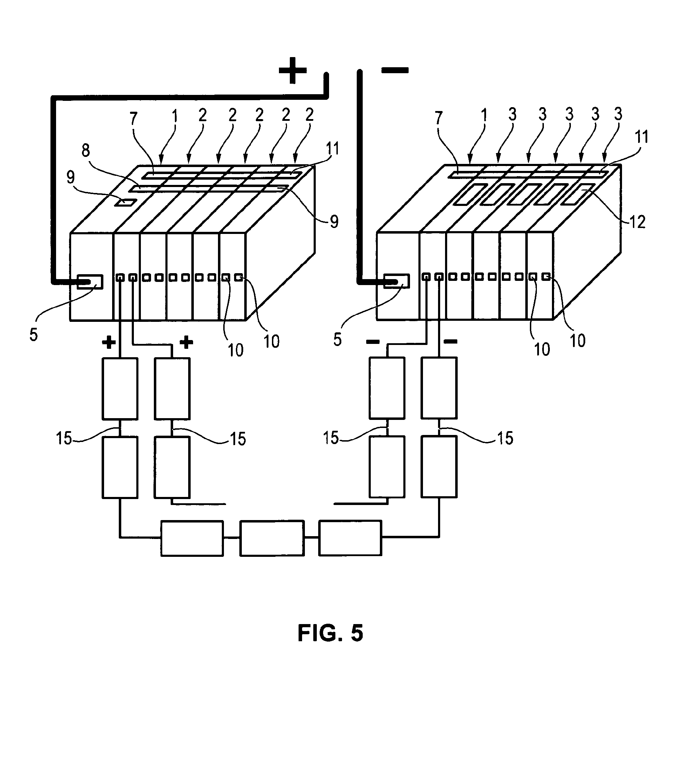

Die schematische Gesamtaufbauzeichnung in Fig. 5 zeigt im linken Teil ein Basismodul 1 und fünf Strangmodule 2. An das dem Basismodul 1 benachbarte Strangmodul 2 sind in der Fig. 5 zwei Stromstränge 15 angeschlossen. Auch an die übrigen Strangmodule sind bei einer realen Anlage Stromstränge 15 angeschlossen. Diese sind der zeichnerischen Deutlichkeit halber in der Fig. 5 jedoch fortgelassen. Aus der Darstellung der Fig. 5 ist auch erkennbar, dass jedes der Strangmodule 2 einen Stromausgang 11 und einen Datenausgang 9 aufweist. Beide Ausgänge sind nur beim rechts außen dargestellten Strangmodul 2 mit Bezugszeichen gekennzeichnet, um die Deutlichkeit der Fig. 5 zu erhalten. Die Stromsammelbrücke 13 und die Datensammelbrücke 14 sind in Fig. 5 nicht extra gezeichnet dargestellt. Sie sind jedoch vorhanden, um den Summenstrom 19 in den Summenstromeingang 7 am Basismodul 1 ebenso einzuleiten wie den Datenstrom 20 in den Dateneingang 8.

Im rechten Teil der Fig. 5 ist eine Baukastenanordnung negativen Potentials gezeigt. Hier hat das Basismodul 1, welches als Sonderbauform ausgestaltet ist, keinen Dateneingang 8. Vielmehr sind die fünf angeschlossenen Funktionsmodule 3 lediglich mit gebrückten Stromausgängen 11 versehen. Der Stromausgang 11 ist der Deutlichkeit halber wiederum nur beim rechten äußeren Funktionsmodul 3 mit einem Bezugszeichen versehen. Die Stromausgänge 11 der Funktionsmodule 3 sind wiederum mit einer in der Figur nicht erkennbaren Stromsammelbrücke 13 versehen, um einen Summenstrom 19 in den Summenstromeingang 7 am Basismodul 1 einleiten zu können. Aus der rechten Hälfte der Fig. 5 ist erkennbar, dass die die Funktionen zur Sicherstellung der Funktionstüchtigkeit der Photovoltaikanlage aufweisenden Funktionsmodule 3 in den Gegenpol der Stromstränge 15 integrierbar sind.

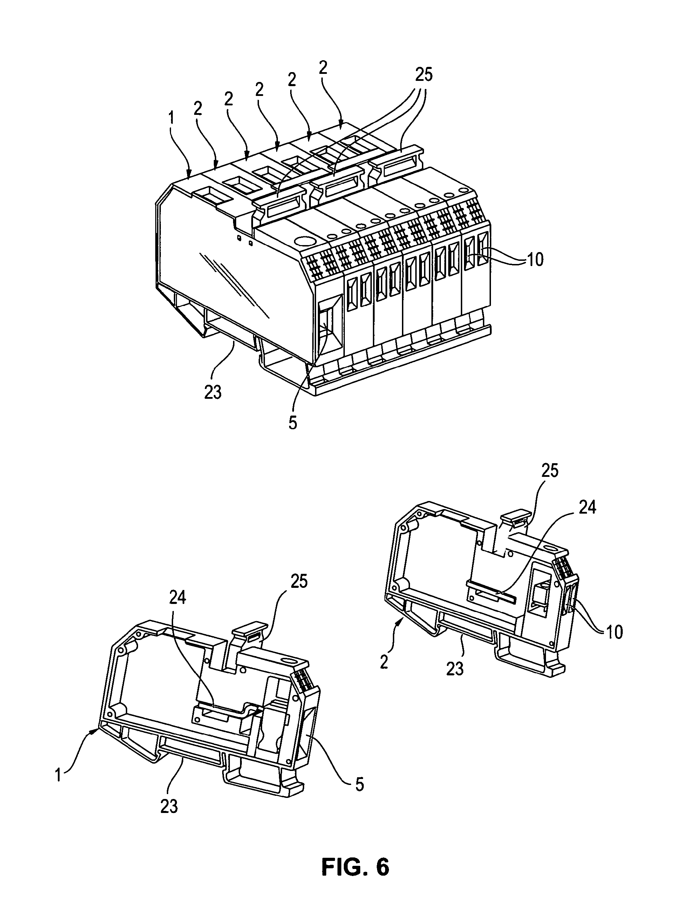

Fig. 6 zeigt oben einen aus einem Basismodul 1 und fünf Strangmodulen 2 zusammengesetzten Klemmenblock. Aus Fig. 6 weiter erkennbar ist eine Montageausnehmung 23 in der Bodenplatte des Basismoduls 1 und der Strangmodule 2. Mit Hilfe der Montageausnehmung 23 sind das Basismodul 1 und die Strangmodule 2 auf einer in Fig. 6 nicht dargestellten Hutschiene adaptierbar.

Schließlich zeigen die geöffneten Ansichten eines Basismoduls 1 und eines Strangmoduls 2 in Fig. 6 unten zunächst Stromschienen 24 im Inneren der Module 1, 2. Die Stromschienen 24 sind in dem in Fig. 6 oben gezeigten Montageendzustand mit Hilfe von Verbindungsschiebern 25 beaufschlagt. Die Verbindungsschieber 25, deren Handhaben in der Darstellung der Fig. 6 oben aus dem Basismodul 1 und dem Strangmodul 2 herausragen, beaufschlagen mit einem Kontaktteil in ihrer in Fig. 6 oben gezeigten Funktionsstellung die ihnen jeweils zugeordnete Stromschiene 24 und leiten das an der Stromschiene 24 anliegende Potential an das in Fig. 6 oben jeweils links benachbarte Strangmodul 2 weiter. Das dem Basismodul 1 benachbarte Strangmodul 2 leitet den gesamten Summenstrom 19 an das Basismodul 1 weiter. Das Basismodul 1 leitet den Summenstrom 19 seinerseits durch den Summenstromausgang 5 an den in den Zeichnungen nicht dargestellten Wechselrichter weiter. Die Verbindungsschieber 25 bilden gemeinsam in ihrer in Fig. 6 oben gezeigten Funktionsendstellung die Stromsammelbrücke 13.

### Bezugszeichenliste

- 1: Basismodul
- 2: Strangmodul
- 3: Funktionsmodul
- 4: kurze Schmalseite
- 5: Summenstromausgang
- 6: lange Schmalseite
- 7: Summenstromeingang
- 8: Dateneingang
- 9: Datenausgang
- 10: Stromeingang
- 11: Stromausgang
- 12: Display
- 13: Stromsammelbrücke
- 14: Datensammelbrücke
- 15: Stromstrang
- 16: Messeinrichtung
- 17: Auswerteeinrichtung
- 18: Datensignal
- 19: Summenstrom
- 20: Datenstrom
- 21: zentrale Auswerteeinheit
- 22: Funktionsbaustein
- 23: Montageausnehmung
- 24: Stromschiene
- 25: Verbindungsschieber

## Patentansprüche

1. Vorrichtung zur Stromeinspeisung in einen Wechselrichter
• mit mindestens einem Strangmodul (2), an welches mindestens ein aus mehreren in Reihe geschalteten Stromquellen bestehender Stromstrang (15) angeschlossen ist und
• mit mindestens einem Basismodul (1), an welches ein oder mehrere Strangmodule (2) angeschlossen sind;
• das Strangmodul (2) weist mindestens
•• einen Stromeingang (10) und einen Stromausgang (11) für den aus dem Stromstrang (15) eingeleiteten Strom,
•• eine Messeinrichtung (16) und eine Auswerteeinrichtung (17) für diesen Strom sowie
•• einen Datenausgang (9) für die von der Auswerteeinrichtung (17) ermittelten Daten auf,
• das Basismodul (1) weist mindestens
•• einen Summenstromeingang (7) und einen Summenstromausgang (5) für den aus den Strangmodulen (2) weitergeleiteten Summenstrom (19),
•• einen Dateneingang (8) für die von den Auswerteeinrichtungen (17) der Strangmodule (2) ermittelten Daten sowie
•• eine zentrale Auswerteeinrichtung (21) zur Aufbereitung und Weitergabe dieser Daten an eine übergeordnete Steuer- und Regeleinrichtung auf,
• die Stromausgänge (11) der Strangmodule (2) sind über eine Stromsammelbrücke (13) miteinander verbunden,
• die Stromsammelbrücke (13) ist ihrerseits am Summenstromeingang (7) des Basismoduls (1) angeschlossen,
• die Datenausgänge (9) der Strangmodule (2) sind über eine Datensammelbrücke (14) miteinander verbunden und
• die Datensammelbrücke (14) ist wiederum am Dateneingang (8) des Basismoduls (1) angeschlossen.

2. Vorrichtung nach Anspruch 1,
**gekennzeichnet durch**
Photovoltaikmodule als Stromquellen.

3. Vorrichtung nach Anspruch 1 oder 2,
**dadurch gekennzeichnet,**
**dass** an jedes Strangmodul (2) zwei Stromstränge (15) angeschlossen sind.

4. Vorrichtung nach einem der vorhergehenden Ansprüche,
**dadurch gekennzeichnet,**
**dass** das Strangmodul (2) und/oder das Basismodul (1) als Reihenklemme ausgebildet sind.

5. Vorrichtung nach Anspruch 4,
**gekennzeichnet durch**
eine als Trennklemme ausgebildete Reihenklemme.

6. Vorrichtung nach einem der vorhergehenden Ansprüche,
**gekennzeichnet durch**
einen Verbindungskamm als Stromsammelbrücke (13) oder Datensammelbrücke (14).

7. Vorrichtung nach einem der vorhergehenden Ansprüche,
**gekennzeichnet durch**
eine Sammelschiene als Stromsammelbrücke (13) oder Datensammelbrücke (14).

8. Vorrichtung nach einem der Ansprüche 1 bis 7,
**gekennzeichnet durch**
eine mit dem Stromeingang (10) gekoppelte Stromschiene (24) im Strangmodul (2) und **durch** einen mit der Stromschiene (24) in Eingriff bringbaren Verbindungsschieber (25) mit zwei leitend verbundenen Kontaktarmen, dessen einer Kontaktarm an der Stromschiene (24) angreift und dessen anderer Kontaktarm als Stromausgang (11) in einen entsprechenden Brückungseingang des benachbarten Strangmoduls (2) eingreift als elektrische Verbindung der benachbarten Strangmodule (2) miteinander.

9. Vorrichtung nach Anspruch 8,
**dadurch gekennzeichnet,**
**dass** der den Stromausgang (11) des dem Basismodul (1) benachbarten Strangmoduls (2) bildende Kontaktarm in einen als Brückungseingang ausgebildeten Summenstromeingang (7) am Basismodul (1) eingreift.

10. Vorrichtung nach einem der vorhergehenden Ansprüche,
**dadurch gekennzeichnet,**
**dass** die Stromsammelbrücke (13) von zwischen benachbarten Strangmodulen (2) und zwischen dem Basismodul (1) und seinem benachbarten Strangmodul (2) wirksamen Steckverbindungen gebildet ist.

11. Vorrichtung nach einem der vorhergehenden Ansprüche,
**dadurch gekennzeichnet,**
**dass** die Datensammelbrücke (14) von zwischen benachbarten Strangmodulen (2) und zwischen dem Basismodul (1) und seinem benachbarten Strangmodul (2) wirksamen Steckverbindungen gebildet ist.

12. Vorrichtung nach einem der Ansprüche 4 bis 11,
**dadurch gekennzeichnet,**
**dass** das Basismodul (1) und die Strangmodule (2) eine auf einer Hutschiene montierte Modulreihe bilden.

13. Vorrichtung nach einem der vorhergehenden Ansprüche,
**gekennzeichnet durch**
weitere Funktionsmodule (3).

14. Vorrichtung nach einem der vorhergehenden Ansprüche als Überwachungssystem für eine Photovoltaikanlage.
